(19) Europäisches Patentamt / European Patent Office / Office européen des brevets

(11) **EP 3 938 836 B1**

(12) **FASCICULE DE BREVET EUROPEEN**

(45) Date de publication et mention de la délivrance du brevet:
**12.04.2023 Bulletin 2023/15**

(21) Numéro de dépôt: **20725874.0**

(22) Date de dépôt: **11.03.2020**

(51) Classification Internationale des Brevets (IPC):
**G02B 27/28** (2006.01)   **G02B 27/42** (2006.01)
**G02B 21/14** (2006.01)

(52) Classification Coopérative des Brevets (CPC):
**G02B 27/283; G02B 21/14; G02B 27/4261; G02B 27/4277**

(86) Numéro de dépôt international:
**PCT/FR2020/050500**

(87) Numéro de publication internationale:
**WO 2020/183107 (17.09.2020 Gazette 2020/38)**

(54) **DISPOSITIF SÉPARATEUR DE POLARISATION, INTERFÉROMÈTRE DIFFÉRENTIEL ET MICROSCOPE OPTIQUE À CONTRASTE DIFFÉRENTIEL COMPRENANT UN TEL DISPOSITIF**

POLARISATIONSSEPARATIONSVORRICHTUNG, DIFFERENZINTERFEROMETER UND OPTISCHES DIFFERENZKONTRASTMIKROSKOP MIT EINER SOLCHEN VORRICHTUNG

POLARISATION SEPARATION DEVICE, DIFFERENTIAL INTERFEROMETER AND DIFFERENTIAL OPTICAL CONTRAST MICROSCOPE COMPRISING SUCH A DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.03.2019 FR 1902638**

(43) Date de publication de la demande:
**19.01.2022 Bulletin 2022/03**

(73) Titulaire: **Horiba France SAS**
**91120 Palaiseau (FR)**

(72) Inventeurs:
• **ACHER, Olivier**
  **SUR-YVETTE 91190 (FR)**
• **RICHARD, Simon**
  **91120 PALAISEAU (FR)**

(74) Mandataire: **Jacobacci Coralis Harle**
**32, rue de l'Arcade**
**75008 Paris (FR)**

(56) Documents cités:
**EP-A1- 3 351 978**

• **TAO ZHAN ET AL: "Pancharatnam-Berry optical elements for head-up and near-eye displays [Invited]", JOURNAL OF THE OPTICAL SOCIETY OF AMERICA - B., vol. 36, no. 5, 22 février 2019 (2019-02-22), page D52, XP055590395, US ISSN: 0740-3224, DOI: 10.1364/JOSAB.36.000D52**
• **ROMAIN LABERDESQUE ET AL: "Tunable angular shearing interferometer based on wedged liquid crystal cells", APPLIED OPTICS, vol. 56, no. 31, 1 novembre 2017 (2017-11-01), page 8656, XP055645278, ISSN: 1559-128X, DOI: 10.1364/AO.56.008656**
• **CHOI KIHONG ET AL: "Incoherent digital holography using geometric phase", MICROFLUIDICS, BIOMEMS, AND MEDICAL MICROSYSTEMS XI : 3 - 5 FEBRUARY 2013, SAN FRANCISCO, CALIFORNIA, UNITED STATES ; [PART OF SPIE PHOTONICS WEST]; IN: PROCEEDINGS OF SPIE; ISSN 0277-786X; VOL. 8615; [PROCEEDINGS OF SPIE; ISSN 0277-786X; VOL. 8615],, vol. 10964, 15 novembre 2018 (2018-11-15), pages 1096461-1096461, XP060114475, DOI: 10.1117/12.2506481 ISBN: 978-1-5106-2099-5**

EP 3 938 836 B1

**Description**

**Domaine technique**

La présente invention concerne de manière générale le domaine des composants optiques séparateurs de polarisation.

Elle concerne plus particulièrement un dispositif séparateur de polarisation ainsi qu'un interféromètre différentiel et un microscope à contraste différentiel comprenant un tel dispositif.

**Arrière-plan technologique**

Les dispositifs séparateurs de polarisation sont des composants optiques qui permettent de séparer un faisceau lumineux incident en deux composantes polarisées suivant des états de polarisation différents.

Des dispositifs séparateurs de polarisation connus sont par exemple les prismes de Rochon et les prismes de Wollaston. Ils sont basés sur l'utilisation de deux prismes constitués de matériaux biréfringents. Ces prismes séparent un faisceau lumineux incident en deux faisceaux lumineux émergents ayant chacun une polarisation linéaire et les polarisations des deux faisceaux lumineux émergents sont orthogonales. L'angle entre les deux faisceaux lumineux émergents dépend des propriétés de biréfringence des matériaux constituant les prismes, de l'orientation des axes de biréfringence par rapport aux faces des prismes et des angles des prismes.

Les prismes de Nomarski sont une variante des prismes de Wollaston. Ils permettent d'obtenir une séparation angulaire du faisceau lumineux incident en deux polarisations linéaires mais également de définir spatialement le point d'intersection de deux faisceaux lumineux émergents polarisés orthogonalement l'un par rapport à l'autre.

Les cubes séparateurs de polarisation (aussi appelés « cubes MacNeille ») constituent un autre type de dispositif séparateur de polarisation. Ils comportent deux prismes en matériaux isotropes reliés par leur hypoténuse. L'hypoténuse comprend un revêtement qui possède des propriétés de réflexion et de transmission en fonction de la polarisation incidente.

Cependant, pour tous ces dispositifs séparateurs de polarisation, l'angle de séparation des faisceaux lumineux émergents est donné par construction. Une fois le composant fabriqué, il n'est pas possible d'ajuster cet angle de séparation. De plus, ces composants à base de prismes ont une épaisseur significative du fait qu'ils reposent sur l'existence d'une surface oblique par rapport au faisceau lumineux incident. Comme la section de ces composants à base de prismes est limitée, la section des faisceaux lumineux émergents est également de taille limitée. Enfin, en sortie de ces composants, les faisceaux lumineux émergents ont des polarisations linéaires.

L'article "Tunable angular shearing interferometer based on wedged liquid crystal cells", Applied Optics, vol. 56, no. 31, 1 novembre 2017 (2017-11-01), page 8656, divulgue un dispositif séparateur de polarisation permettant un ajustement de l'angle de séparation des faisceaux polarisés.

**Objet de l'invention**

Afin de remédier aux inconvénients précités de l'état de la technique, la présente invention propose un dispositif séparateur de polarisation mince dont l'angle de séparation est aisément ajustable.

Plus particulièrement, on propose selon l'invention un dispositif séparateur de polarisation destiné à recevoir un faisceau lumineux incident. Selon l'invention, le dispositif comprend une première lentille de phase géométrique, ayant un premier centre optique, un premier axe optique et une première longueur focale positive pour un premier état de polarisation circulaire et une longueur focale opposée pour un autre état de polarisation circulaire orthogonal au premier état de polarisation circulaire, et une deuxième lentille de phase géométrique, ayant un deuxième centre optique, un deuxième axe optique et une deuxième longueur focale positive pour le premier état de polarisation circulaire et une longueur focale opposée pour l'autre état de polarisation circulaire, le premier axe optique et le deuxième axe optique formant un angle inférieur à quelques degrés, la première et la deuxième lentilles de phase géométrique étant séparées l'une de l'autre par une première distance selon le premier axe optique. Selon l'invention, le dispositif est configuré et orienté de manière à ce qu'une projection du premier centre optique suivant le premier axe optique sur la deuxième lentille optique de phase géométrique est située à une deuxième distance non nulle du deuxième centre optique, ladite première distance étant inférieure à ladite première longueur focale et à ladite deuxième longueur focale.

Ainsi, selon l'invention, un décalage transversal est introduit entre le premier centre optique de la première lentille de phase géométrique et le deuxième centre optique de la deuxième lentille de phase géométrique. De par leurs propriétés, les deux lentilles de phase géométrique permettent de séparer les deux composantes de polarisation circulaires droite et gauche d'un faisceau lumineux. Par construction, ces deux composantes sont, en sortie du dispositif conforme à l'invention, déviées d'un certain angle de séparation qui va dépendre du décalage transversal entre les deux centres optiques. Grâce à l'invention, ce décalage est ajustable, permettant donc d'ajuster l'angle de séparation entre les deux faisceaux correspondant aux deux composantes de polarisation circulaires, en déplaçant la deuxième lentille de phase géométrique transversalement à l'axe optique. Selon l'invention, la combinaison de deux lentilles de phase géométrique est donc avantageuse pour permettre d'ajuster l'angle de séparation des polarisations en sortie du dispositif. De plus, la faible épaisseur des lentilles de phase géométrique permet d'obtenir un dispositif mince.

D'autres caractéristiques non limitatives et avantageuses du dispositif séparateur de polarisation conforme à l'invention, prises individuellement ou selon toutes les combinaisons techniquement possibles, sont les suivantes :

- la première longueur focale et la deuxième longueur focale présentent un écart inférieur ou égal à 10 % ;

- le deuxième axe optique est décalé de la deuxième distance par rapport au premier axe optique ;

- il est prévu un moyen de translation entre la première et la deuxième lentilles de phase géométrique, ledit moyen de translation étant adapté à décaler le deuxième centre optique par rapport au premier centre optique selon une direction transverse au premier axe optique ;

- le premier axe optique forme un angle par rapport à un axe de propagation du faisceau lumineux incident sur ledit dispositif ;

- il est prévu un moyen de rotation de la première et de la deuxième lentille de phase géométrique, la première lentille de phase géométrique et la deuxième lentille de phase géométrique étant maintenues parallèles l'une à l'autre, ledit moyen de rotation étant adapté à incliner simultanément ladite première et ladite deuxième lentille de phase géométrique par rapport au faisceau lumineux incident ;

- la première distance est inférieure à 20% de la première longueur focale et de la deuxième longueur focale ;

- la première lentille de phase géométrique et/ou la deuxième lentille de phase géométrique ont une puissance optique sphérique ou cylindrique ;

- il est prévu une lentille optique divergente ;

- il est prévu une lame à retard quart d'onde ; et

- il est prévu une troisième lentille de phase géométrique, ayant un troisième centre optique, un troisième axe optique et une troisième longueur focale, et une quatrième lentille de phase géométrique, ayant un quatrième centre optique, un quatrième axe optique et une quatrième longueur focale, la troisième lentille de phase géométrique et la quatrième lentille de phase géométrique étant disposées de manière à présenter une puissance optique du même signe pour le premier état de polarisation circulaire et du signe opposé pour l'autre état de polarisation circulaire, le troisième axe optique et le quatrième axe optique formant un angle inférieur à quelques degrés avec le premier axe optique, la troisième et la quatrième lentilles de phase géométrique étant séparées l'une de l'autre par une troisième distance selon le troisième axe optique, une projection du troisième centre optique suivant le troisième axe optique sur la quatrième lentille de phase géométrique étant située à une quatrième distance non nulle du quatrième centre optique, ladite troisième distance étant inférieure à ladite troisième longueur focale et à ladite quatrième longueur focale.

L'invention propose également un interféromètre différentiel comprenant un dispositif séparateur de polarisation tel que décrit précédemment.
L'invention propose également un microscope optique à contraste différentiel comprenant un dispositif séparateur de polarisation tel que décrit précédemment.

**Description détaillée d'un exemple de réalisation**

La description qui va suivre en regard des dessins annexés, donnés à titre d'exemples non limitatifs, fera bien comprendre en quoi consiste l'invention et comment elle peut être réalisée.
Sur les dessins annexés :

[Fig. 1] est une représentation schématique des différents éléments d'un dispositif séparateur de polarisation conforme à l'invention,

[Fig. 2] est une représentation schématique d'un premier exemple de dispositif séparateur de polarisation conforme à l'invention,

[Fig. 3] est une représentation schématique d'un deuxième exemple de dispositif séparateur de polarisation conforme à l'invention,

[Fig. 4] est une représentation schématique d'une variante du premier ou du deuxième exemple de dispositif séparateur de polarisation conforme à l'invention,

[Fig. 5] est une représentation schématique d'un autre exemple de dispositif séparateur de polarisation conforme à l'invention,

[Fig. 6] est une représentation schématique d'un premier exemple d'un système d'interférométrie différentielle comprenant un dispositif séparateur de polarisation conforme à l'invention,

[Fig. 7] est une représentation schématique d'un deuxième exemple d'un système d'interférométrie différentielle comprenant un dispositif séparateur de polarisation conforme à l'invention, et

[Fig. 8] est une représentation schématique d'un dispositif séparateur de polarisation conforme à l'invention par exemple destiné à être intégré dans un microscope à contraste différentiel.

La présente invention concerne un dispositif 1 séparateur de polarisation (aussi appelé dispositif 1 dans la suite).

Dans cette description, un composant optique appelé « lentille de phase géométrique » (ou « *geometric-phase lens* » selon l'appellation d'origine anglo-saxonne) est introduit. Une lentille de phase géométrique est réalisée à partir d'hologrammes de phase géométrique (ou « *geometric-phase holograms* » selon l'appellation d'origine anglo-saxonne) et/ou de cristaux liquides. La réalisation de lentilles de phase géométrique est présentée dans le document Optimization of aspheric geometric-phase lenses for improved field-of-view, Kathryn J. Hornburg et al. (SPIE Optical Engineering and Applications, Proceedings Volume 10743, Optical Modeling and Performance Predictions X; 1074305, 2018).

Une lentille de phase géométrique est fabriquée à partir de cristaux liquides. Une phase différente est définie en chaque point du composant à partir du schéma d'orientation des cristaux liquides.

En ce qui concerne le fonctionnement de ces composants, on considère un faisceau lumineux traversant l'une de ces lentilles de phase géométrique. Comme cela est connu, le faisceau lumineux peut être décomposé en une composante de polarisation circulaire droite et en une composante de polarisation circulaire gauche. Par sa conception, pour l'une des polarisations circulaires (par exemple la polarisation circulaire droite), la lentille de phase géométrique se comporte comme une lentille convergente de longueur focale +f. Pour l'autre polarisation (ici la polarisation circulaire gauche), la lentille de phase géométrique se comporte comme une lentille divergente de longueur focale -f. Autrement dit, une lentille de phase géométrique a une puissance optique positive pour une polarisation circulaire et une puissance optique négative pour l'autre polarisation circulaire. De plus, à la traversée de la lentille de phase géométrique, l'état de polarisation circulaire droite est transformée en polarisation circulaire gauche et vice versa.

Une seule lentille de phase géométrique ne permet pas de séparer spatialement les deux polarisations circulaires orthogonales. Une lentille de phase géométrique fonctionne généralement pour une plage donnée de longueurs d'onde, par exemple comprise entre 450 et 600 nm.

Les lentilles de phase géométrique utilisées dans l'invention sont par exemple du type des composants commercialisés sous le nom de « lentilles plates dirigées en polarisation » (ou « *polarization directed flat lenses* ») par la compagnie Edmund Optics ou la compagnie ImagineOptix.

En pratique, une lentille de phase géométrique présente un aspect plat c'est-à-dire sans rayon de courbure physique. L'épaisseur d'une lentille de phase géométrique est faible, typiquement de l'ordre de 0,4 millimètres (mm). Le diamètre d'une lentille de phase géométrique est typiquement de l'ordre de 25 mm. La surface d'une lentille de phase géométrique est par exemple de $120 \times 120$ mm$^2$.

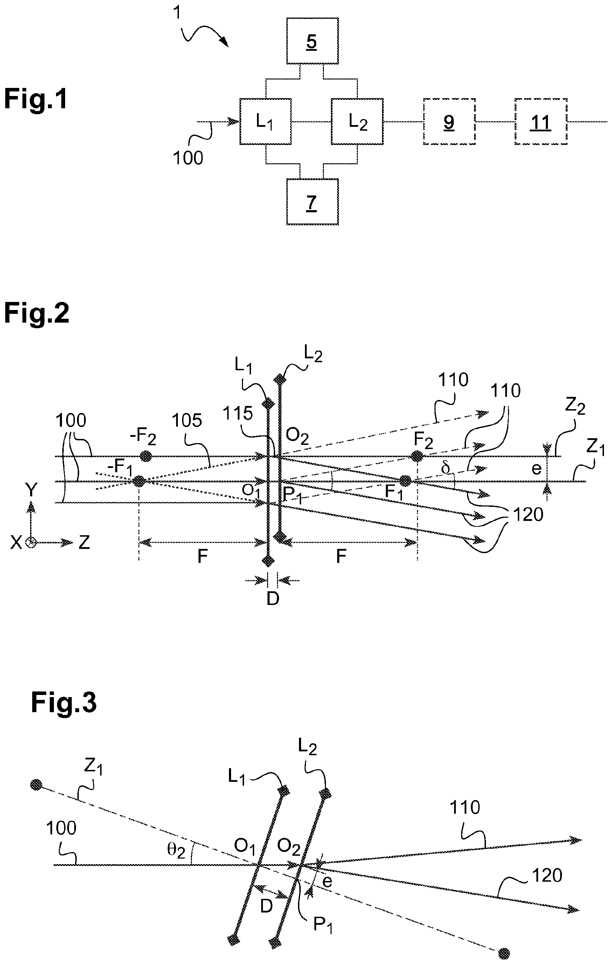

La figure 1 représente les différents éléments d'un dispositif séparateur de polarisation 1 conforme à l'invention destiné à recevoir un faisceau lumineux incident 100. Ce faisceau lumineux incident 100 est généralement collimaté. En variante, le faisceau lumineux incident 100 n'est pas collimaté en entrée du dispositif 1.

Le dispositif 1 comprend une première lentille de phase géométrique $L_1$ et une deuxième lentille de phase géométrique $L_2$. Le dispositif 1 comprend de manière optionnelle un moyen de translation 5 entre la première lentille de phase géométrique $L_1$ et la deuxième lentille de phase géométrique $L_2$ et/ou un moyen de rotation 7 de la première lentille de phase géométrique $L_1$ et de la deuxième lentille de phase géométrique $L_2$, une lentille 9 et/ou une lame à retard quart-d'onde 11.

Comme visible sur les figures 2 à 4, la première lentille de phase géométrique $L_1$ a un premier centre optique

$O_1$, un premier axe optique $Z_1$ et une première longueur focale $F_1$. Le premier axe optique $Z_1$ est orthogonal aux faces plates de la première lentille de phase géométrique $L_1$ et passe par le premier centre optique $O_1$. La deuxième lentille de phase géométrique $L_2$ a un deuxième centre optique Oz, un deuxième axe optique $Z_2$ et une deuxième longueur focale $F_2$. Le deuxième axe optique $Z_2$ est orthogonal aux faces plates de la deuxième lentille de phase géométrique $L_2$ et passe par le deuxième centre optique $O_2$. De préférence, la première longueur focale $F_1$ et la deuxième longueur focale $F_2$ sont égales à une longueur focale F pour maintenir les faisceaux collimatés. Le dispositif fonctionne aussi si la première longueur focale $F_1$ et la deuxième longueur focale $F_2$ sont différentes mais proches, par exemple d'un écart inférieur ou égal à 10 %.

Ici la première lentille de phase géométrique $L_1$ et la deuxième lentille de phase géométrique $L_2$ ont une puissance optique sphérique. La première lentille de phase géométrique $L_1$ et la deuxième lentille de phase géométrique $L_2$ sont convergentes pour une polarisation circulaire et divergentes pour l'autre polarisation circulaire. Dans ce cas, la première lentille de phase géométrique $L_1$ et la deuxième lentille de phase géométrique $L_2$ focalisent respectivement aux points focaux $F_1$ et $-F_1$ sur le premier axe optique Z, et aux points focaux $F_2$ et $-F_2$ sur le deuxième axe optique $Z_2$. En variante, la première lentille de phase géométrique $L_1$ et la deuxième lentille de phase géométrique $L_2$ ont une puissance optique cylindrique, tout en étant convergentes pour une polarisation circulaire et divergentes pour l'autre polarisation circulaire. Dans le cas d'une lentille ayant une puissance optique cylindrique, par exemple dans le cas où la première lentille de phase géométrique $L_1$ a une puissance optique cylindrique, un faisceau lumineux incident collimaté d'axe parallèle au premier axe optique Z, est focalisé suivant un segment de droite orthogonal au premier axe optique $Z_1$ passant par le point focal $F_1$ pour une polarisation circulaire et suivant un autre segment de droite orthogonal au premier axe optique $Z_1$ passant par le point focal $-F_1$ pour l'autre polarisation circulaire. Ces lentilles de phase géométrique, qu'elles aient une puissance optique sphérique ou cylindrique, présentent différentes aberrations géométriques, tout comme les lentilles conventionnelles sphériques ou cylindriques peuvent l'être en étant désignées sous la dénomination de lentille asphérique ou acylindrique. Selon leur conception, les lentilles de phase géométrique peuvent présenter des aberrations géométriques moindres. Les lentilles de phase géométrique peuvent également être corrigées d'aberrations chromatiques sur une bande spectrale prédéterminée.

La première lentille de phase géométrique $L_1$ et la deuxième lentille de phase géométrique $L_2$ sont positionnées dans le même sens.

La première lentille de phase géométrique $L_1$ et la deuxième lentille de phase géométrique $L_2$ sont en contact ou séparées l'une de l'autre d'une première distance D selon le premier axe optique $Z_1$. En pratique, cette première distance D est inférieure à la première longueur focale $F_1$ et à la deuxième longueur focale $F_2$. La première distance D est par exemple inférieure à 20% de la première longueur focale $F_1$ et de la deuxième longueur focale $F_2$. De préférence, la première distance D est par exemple inférieure à 10% de la première longueur focale $F_1$ et de la deuxième longueur focale $F_2$. En d'autres termes, la première distance D est aussi faible que possible. Dans le cas où la première longueur focale $F_1$ et la deuxième longueur focale $F_2$ sont égales à la longueur focale F, la première distance D est inférieure à la longueur focale F, en pratique inférieure à 20% de la longueur focale F. De préférence, la première distance D est inférieure à 10% de la longueur focale F. De préférence, la première distance D est non nulle afin d'éviter la formation d'interférences entre la première lentille de phase géométrique L1 et la deuxième lentille de phase géométrique $L_2$. Sur la figure 2, la première distance D est par exemple de l'ordre de 0,5 mm.

De manière générale, le premier axe optique $Z_1$ et le deuxième axe optique $Z_2$ forment un angle inférieur à quelques degrés. Dans la suite, le premier axe optique $Z_1$ et le deuxième axe optique $Z_2$ sont par exemple parallèles.

Le dispositif 1 est configuré de manière à ce que le deuxième centre optique Oz soit décalé d'une deuxième distance e par rapport à une projection $P_1$ du premier centre optique $O_1$ sur la deuxième lentille de phase géométrique $L_2$ suivant le premier axe optique $Z_1$, transversalement à un axe Z tel que défini par le repère orthonormé XYZ représenté sur les figures 2 à 4 (la deuxième distance e est donc fixée dans ce cas).

Par exemple, la deuxième distance e peut être fixée à la fabrication du dispositif 1.

De manière optionnelle, le dispositif 1 comprend en outre le moyen de translation 5 entre la première lentille de phase géométrique $L_1$ et la deuxième lentille de phase géométrique $L_2$. Le moyen de translation 5 est adapté pour ajuster la deuxième distance e selon une direction transverse au premier axe optique $Z_1$ (et par exemple aussi au deuxième axe optique $Z_2$ dans le cas où le premier axe optique $Z_1$ et le deuxième axe optique $Z_2$ sont parallèles). En pratique, le moyen de translation 5 est donc adapté à décaler la deuxième lentille de phase géométrique $L_2$ de la deuxième distance e selon une direction transversale au premier axe optique $Z_1$. Dans cet exemple, la projection $P_1$ du premier centre optique $O_1$ suivant le premier axe optique $Z_1$ sur la deuxième lentille de phase géométrique $L_2$ est située à la deuxième distance e du deuxième centre optique Oz. Ici, la deuxième distance e est par exemple de l'ordre de 5 mm.

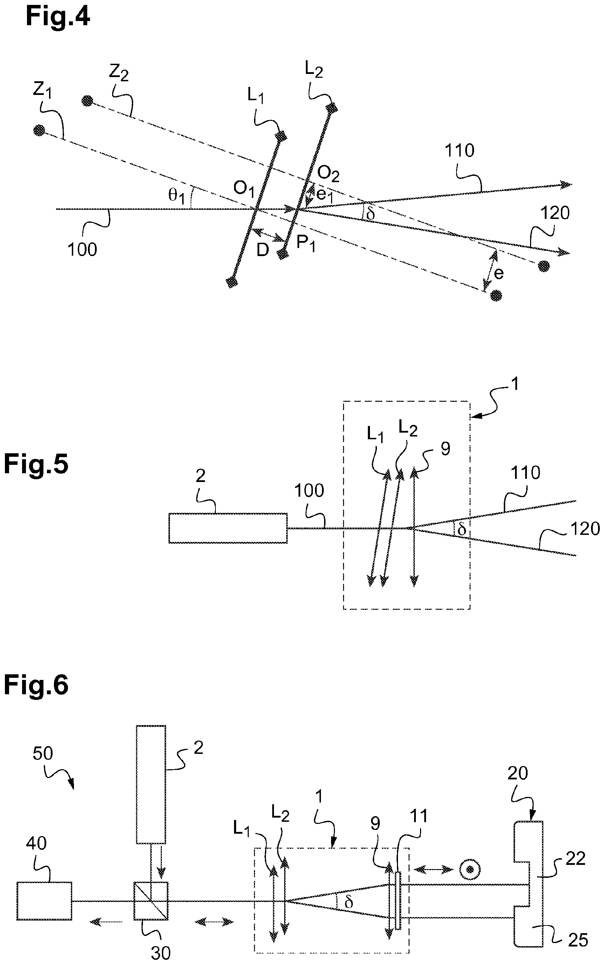

De manière optionnelle, le dispositif 1 comprend la lentille 9 dite de compensation (dont le rôle est expliqué ci-après). Cette lentille 9 est par exemple une lentille conventionnelle divergente. Comme représenté sur la figure 5, la lentille 9 est positionnée après la première lentille de phase géométrique $L_1$ et la deuxième lentille de phase géométrique $L_2$. En variante, la lentille 9 peut être positionnée en entrée du dispositif 1.

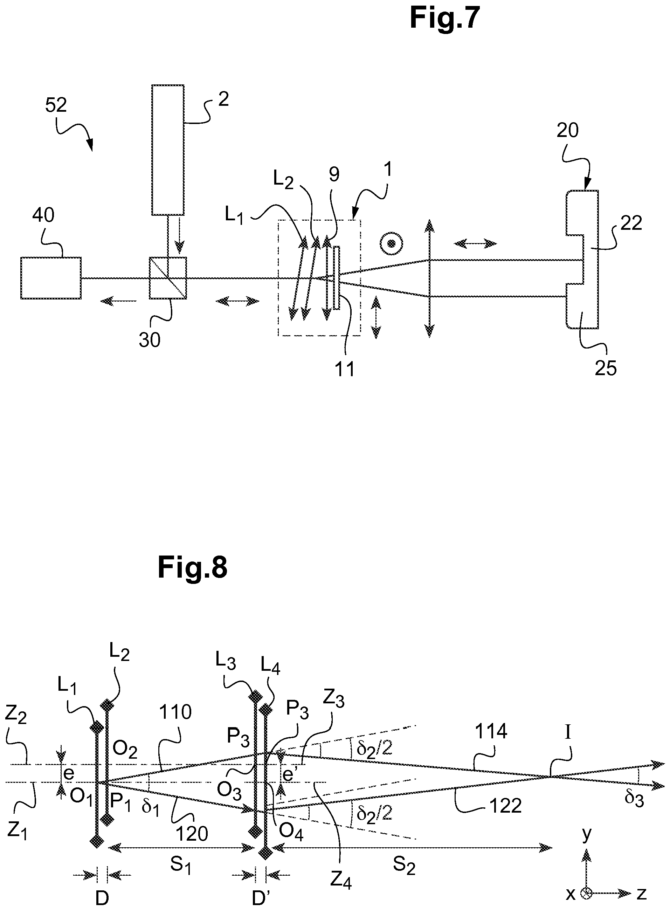

De manière optionnelle encore, le dispositif 1 comprend une lame à retard quart-d'onde 11. Comme représenté sur les figures 6 et 7, la lame à retard quart-d'onde 11 est positionnée après la première lentille de phase géométrique $L_1$ et la deuxième lentille de phase géométrique $L_2$, ici après la lentille 9 de compensation.

La figure 2 représente un premier mode de réalisation du dispositif 1 séparateur de polarisation conforme à l'invention. De préférence, la première lentille de phase géométrique $L_1$ et la deuxième lentille de phase géométrique $L_2$ ont la même longueur focale F. Par exemple, la longueur focale F est comprise entre 40 et 100 mm, typiquement de l'ordre de 50 mm.

Ici, la première lentille de phase géométrique $L_1$ et la deuxième lentille de phase géométrique $L_2$ sont placées au contact ou à proximité l'une de l'autre. La première distance D entre la première lentille de phase géométrique $L_1$ et la deuxième lentille de phase géométrique $L_2$ est donc faible devant la longueur focale F. Par exemple, la première distance D est de l'ordre de 3 mm.

Dans ce premier mode de réalisation, la direction de propagation du faisceau lumineux incident 100 est parallèle au premier axe optique Z, et au deuxième axe optique $Z_2$.

Selon ce premier mode de réalisation, le deuxième centre optique Oz est décalé de la deuxième distance e par rapport au premier axe optique $Z_1$ dans une direction transversale à l'axe de propagation du faisceau lumineux incident 100 qui est parallèle au premier axe optique $Z_1$ et au deuxième axe optique $Z_2$. La deuxième distance e est comprise entre 100 $\mu$m et quelques millimètres.

Comme visible par exemple sur la figure 2, grâce au moyen de translation 5 ou par construction dans le cas où la deuxième distance e est fixée par construction, le deuxième axe optique $Z_2$ est décalé de la deuxième distance e par rapport au premier axe optique $Z_1$. Un sens de décalage du deuxième axe optique $Z_2$ par rapport au premier axe optique Z, est également défini à partir de la position du deuxième centre optique Oz par rapport au premier axe optique Z, dans le repère orthonormé XYZ. Le sens de décalage est par exemple défini à partir de la position du deuxième centre optique Oz dans le plan XY orthogonal à l'axe Z. En variante, le sens de décalage peut être défini à partir de la position du deuxième centre optique $O_2$ par rapport à l'axe de propagation du faisceau lumineux incident 100.

En pratique, en considérant par exemple la composante de polarisation circulaire droite du faisceau lumineux incident 100, de par son fonctionnement et son orientation, la première lentille de phase géométrique $L_1$ se comporte par exemple comme une lentille convergente de longueur focale F. La deuxième lentille de phase géométrique $L_2$ est orientée de manière à se comporter quant à elle comme une lentille divergente de longueur focale -F pour une polarisation incidente circulaire gauche. Autrement dit, la première lentille de phase géométrique $L_1$ et la deuxième lentille de phase géométrique $L_2$ sont disposées de manière à présenter une puissance optique de même signe pour un premier état de polarisation circulaire et une puissance optique de signe opposé pour l'autre état de polarisation circulaire orthogonal au premier état de polarisation circulaire.

A la sortie de la première lentille de phase géométrique $L_1$, la composante de polarisation circulaire droite du faisceau lumineux incident 100 est transformée en un premier faisceau lumineux intermédiaire 115 de polarisation circulaire gauche de par les propriétés de la première lentille de phase géométrique $L_1$. Le premier faisceau lumineux intermédiaire 115 est focalisé dans le plan du point focal $F_1$. Comme le point focal $F_1$ est proche du point focal $F_2$ de la deuxième lentille de phase géométrique $L_2$, cette dernière forme un deuxième faisceau lumineux polarisé 120 qui est généralement collimaté. Du fait de la présence du décalage de la deuxième distance e entre le point focal $F_1$ et le point focale $F_2$, le deuxième faisceau lumineux polarisé 120 est dévié angulairement suivant l'axe $O_2F_1$. Ce premier faisceau lumineux intermédiaire 115 est donc transformé en le deuxième faisceau lumineux polarisé 120, qui est de polarisation circulaire droite de par les propriétés de la deuxième lentille de phase géométrique $L_2$.

Les lois de l'optique géométrique permettent de tracer l'évolution de la composante de polarisation circulaire droite du faisceau lumineux incident 100 de manière à obtenir le deuxième faisceau lumineux polarisé 120 avec une polarisation circulaire droite. Le trajet de la composante de polarisation circulaire droite est représenté en trait plein sur la figure 2.

De manière symétrique, en considérant la composante de polarisation circulaire gauche du faisceau lumineux incident 100, la première lentille de phase géométrique $L_1$ se comporte comme une lentille divergente de longueur focale -F. La deuxième lentille de phase géométrique $L_2$ se comporte quant à elle comme une lentille convergente de longueur focale F.

A la sortie de la première lentille de phase géométrique $L_1$, la composante de polarisation circulaire gauche du faisceau lumineux incident 100 est transformée en un deuxième faisceau lumineux intermédiaire 105 de polarisation circulaire droite de par les propriétés de la première lentille de phase géométrique $L_1$ focalisé dans le plan du point focal $-F_1$. Ce deuxième faisceau lumineux intermédiaire 105 est ensuite transformé en le premier faisceau lumineux polarisé 110, qui est de polarisation circulaire gauche de par les propriétés de la deuxième lentille de phase géométrique Lz. Le deuxième faisceau lumineux intermédiaire 105 est focalisé dans le plan du point focal $-F_1$. Comme le point focal $-F_1$ est proche de point focal $-F_2$ de la deuxième lentille de phase géométrique $L_2$, cette dernière forme un premier faisceau lumineux polarisé 110 qui est généralement collimaté. Du fait de la présence du décalage de la deuxième distance e entre le point focal -F$_1$ et le point focale -F$_2$, le premier faisceau lumineux polarisé 110 est dévié angulairement suivant l'axe -F$_1$O$_2$ dans le plan YZ. L'angle de déviation $\widehat{O_1-F_1O_2}$ est de l'ordre de e/F.

Les lois de l'optique géométrique permettent de tracer l'évolution de la composante circulaire gauche de manière à obtenir le premier faisceau lumineux polarisé 110 avec une polarisation circulaire gauche. Le trajet de la composante de polarisation circulaire gauche est représenté en pointillés sur la figure 2.

Comme visible sur la figure 2, de manière avantageuse selon l'invention, le faisceau lumineux incident 100 est séparé angulairement en un premier faisceau lumineux polarisé 110 et en un deuxième faisceau lumineux polarisé 120. De manière avantageuse selon l'invention, le premier faisceau lumineux polarisé 110 et le deuxième faisceau lumineux polarisé 120 ont des polarisations orthogonales. Par exemple ici, le premier faisceau lumineux polarisé 110 a une polarisation circulaire gauche et le deuxième faisceau lumineux polarisé 120 a une polarisation circulaire droite. Un angle de séparation δ est défini entre le premier faisceau lumineux polarisé 110 et le deuxième faisceau lumineux polarisé 120. Cet angle de séparation δ dépend de la deuxième distance e et de la longueur focale F. De façon approchée pour la première distance D très faible devant la longueur focale F et la deuxième distance e très faible devant la longueur focale F, l'angle de séparation δ est donné par la relation :

[Math. 1]

$$\delta = \frac{2e}{F}$$

Selon l'invention, le plan de séparation de la polarisation circulaire droite et de la polarisation circulaire gauche du faisceau lumineux incident 100 est parallèle à l'axe de propagation de faisceau lumineux incident 100 et à la droite reliant le premier centre optique O$_1$ et le deuxième centre optique Oz.

Dans l'exemple d'une longueur focale F de l'ordre de 50 mm, la loi de séparation angulaire donne alors un décalage δ/e entre les deux faisceaux lumineux polarisés de l'ordre de 40 mrad/mm (ou 2,3 deg/mm).

L'angle de séparation δ est donc ajustable en changeant la deuxième distance e entre le premier centre optique O$_1$ et le deuxième centre optique Oz. En pratique, l'angle de séparation δ est ajustable en déplaçant la deuxième lentille de phase géométrique L$_2$ de manière à modifier la deuxième distance e. Selon l'invention, la combinaison de deux lentilles de phase géométrique est avantageuse pour permettre d'ajuster l'angle de séparation des polarisations en sortie du dispositif 1 contrairement aux séparateurs de polarisation connus qui ont un angle de séparation fixe. L'orientation de la deuxième distance e dans le plan XY par rapport aux positions relatives de la première lentille de phase géométrique L$_1$ et de la deuxième lentille de phase géométrique L$_2$ permet également d'orienter le plan de séparation des faisceaux lumineux polarisée 110, 120. En pratique, la séparation des faisceaux lumineux polarisés 110, 120 est observée dans le plan contenant le premier axe optique Z$_1$ et le deuxième axe optique Z$_2$. De plus, le dispositif 1 séparateur de polarisation est mince grâce au faible encombrement des lentilles de phase géométrique. Par exemple, l'épaisseur du dispositif 1 est inférieure à 1,5 mm, typiquement de l'ordre de 1,3 mm (contre environ 20 mm pour les dispositifs connus).

Le dispositif 1 conforme à l'invention est apte à manipuler des faisceaux lumineux de grande section, ce qui est utile dans pour les applications d'imagerie, sans que l'encombrement en épaisseur soit augmenté. Par exemple, un dispositif séparateur de polarisation conforme à l'invention comprenant deux lentilles de phase géométrique de diamètre 25 mm et d'épaisseur 0,4 mm placées à 0,5 mm et avec un décalage d'axes optiques de 5 mm, donc d'épaisseur globale de 1,3 mm, permet d'effectuer une séparation en polarisation d'un faisceau de 20 mm de diamètre. Les séparateurs de polarisation connus permettant de traiter ce genre de faisceaux lumineux sont généralement une épaisseur de l'ordre de 20 mm.

La figure 3 représente un deuxième mode de réalisation du dispositif 1 séparateur de polarisation conforme à l'invention.

De manière optionnelle, le dispositif 1 comprend également le moyen de rotation 7 de la première lentille de phase géométrique L$_1$ et la deuxième lentille de phase géométrique L$_2$. Le moyen de rotation 7 est adapté à incliner simultanément la première lentille de phase géométrique L$_1$ et la deuxième lentille de phase géométrique L$_2$ de manière à ce que le premier axe optique Z$_1$ forme un angle θ par rapport à l'axe de propagation du faisceau lumineux incident 100. Le moyen de rotation 7 maintient la première lentille de phase géométrique L$_1$ et la deuxième lentille de phase géométrique L$_2$ parallèles entre elles lors de leur rotation simultanée.

Selon ce deuxième mode de réalisation, le décalage introduit entre le premier centre optique O$_1$ et le deuxième centre optique O$_2$ peut être issu uniquement de l'inclinaison de l'ensemble de la première lentille de phase géométrique

$L_1$ et de la deuxième lentille de phase géométrique $L_2$. Dans l'exemple illustré sur la figuré 3, le premier axe optique $Z_1$ et le deuxième axe optique $Z_2$ sont confondus. La première lentille de phase géométrique $L_1$ et la deuxième lentille de phase géométrique $L_2$ sont inclinées simultanément, par exemple via le moyen de rotation 7, de manière à introduire un angle d'inclinaison $\theta_1$ entre l'axe de propagation du faisceau lumineux incident 100 et le premier axe optique $Z_1$ (qui est ici confondu avec le deuxième axe optique $Z_2$). La direction de propagation du faisceau lumineux incident 100 est donc inclinée par rapport au premier axe optique Z, et au deuxième axe optique $Z_2$ de l'angle d'inclinaison $\theta_1$ L'angle d'inclinaison $\theta_1$ est compris entre 0 et 90 degrés (c'est-à-dire entre 0 et 1,57 radians), de préférence inférieur à 20 degrés (cas d'un faible angle d'inclinaison).

Le deuxième centre optique $O_2$ est décalé d'une deuxième distance e par rapport à la projection $P_1$ du premier centre optique $O_1$ sur la deuxième lentille de phase géométrique $L_2$ suivant le premier axe optique $Z_1$, transversalement à un axe Z tel que défini par le repère orthonormé XYZ.

Dans ce cas, le décalage introduit par la rotation de l'ensemble de la première lentille de phase géométrique $L_1$ et de la deuxième lentille de phase géométrique $L_2$, correspondant à la projection $P_1$ du premier centre optique $O_1$ suivant le premier axe optique $Z_1$ sur la deuxième lentille de phase géométrique $L_2$, est égal à D.tan($\theta_1$). Et finalement, l'angle de séparation $\delta$ est donné par la relation approchée suivante :

[Math. 2]

$$\delta = \frac{2D.tan(\theta_1)}{F}$$

Pour une première distance D de l'ordre de 3 mm et une valeur faible de l'angle d'inclinaison $\theta_1$ (de l'ordre de quelques degrés, en pratique inférieur à 20 degrés), la loi de séparation angulaire $\delta/\theta_1$ est de l'ordre de 0,12.

Dans cet exemple, le plan de séparation de la polarisation circulaire droite et de la polarisation circulaire gauche du faisceau lumineux incident 100 est parallèle à l'axe de propagation de faisceau lumineux incident 100 et à la droite reliant le premier centre optique $O_1$ et le deuxième centre optique Oz.

En variante, le décalage introduit entre le premier centre optique $O_1$ et le deuxième centre optique $O_2$ peut être issu d'une combinaison d'un décalage transversal tel que préalablement introduit et de l'inclinaison de l'ensemble de la première lentille de phase géométrique $L_1$ et de la deuxième lentille de phase géométrique $L_2$ par rapport au faisceau lumineux incident 100. La première lentille de phase géométrique $L_1$ et la deuxième lentille de phase géométrique $L_2$ sont inclinées simultanément par le moyen de rotation 7 de manière à introduire un angle d'inclinaison $\theta_1$ entre l'axe de propagation du faisceau lumineux incident 100 et le premier axe optique $Z_1$. Comme le premier axe optique $Z_1$ et le deuxième axe optique $Z_2$ sont parallèles, le même angle $\theta_1$ est observé entre l'axe de propagation du faisceau lumineux incident 100 et le deuxième axe optique $Z_2$. L'angle d'inclinaison $\theta_1$ est compris entre 0 et 90° (c'est-à-dire entre 0 et 1,57 radians), de préférence inférieur à 20° (cas d'un faible angle d'inclinaison).

La figure 4 représente cette variante du dispositif 1 séparateur de polarisation conforme à l'invention. Elle correspond à une variante du premier mode de réalisation dans lequel l'ensemble de la première lentille de phase géométrique $L_1$ et de la deuxième lentille de phase géométrique $L_2$ est incliné. En d'autres termes, la première lentille de phase géométrique $L_1$ et la deuxième lentille de phase géométrique $L_2$ sont décalées de la deuxième distance $e_1$ dans une direction transversale à l'axe de propagation du faisceau lumineux incident 100 puis inclinées par exemple par le moyen de rotation 7 de manière à ce que l'axe de propagation du faisceau lumineux incident 100 et le premier axe optique $Z_1$ forment un autre angle d'inclinaison $\theta_2$. La direction de propagation du faisceau lumineux incident 100 est donc inclinée par rapport au premier axe optique Z, et au deuxième axe optique $Z_2$ de l'autre angle d'inclinaison $\theta_2$. En pratique, l'angle d'inclinaison $\theta_2$ est inférieur à 20°.

Dans ce cas, le décalage entre la projection $P_1$ du premier centre optique $O_1$ et le deuxième centre optique $O_2$ introduit par la rotation de l'ensemble de la première lentille de phase géométrique $L_1$ et de la deuxième lentille de phase géométrique $L_2$ est égal à D.tan($\theta_2$). Et finalement, l'angle de séparation $\delta$ entre le premier faisceau lumineux polarisé 110 et le deuxième faisceau lumineux polarisé 120 est donné par la relation :

[Math. 3]

$$\delta = \frac{2(e_1 + D.tan(\theta_2))}{F}$$

La deuxième distance $e_1$ peut être fixe par construction. De manière avantageuse, cette variante permet d'introduire, à moindre coût, un décalage ajustable entre la première lentille de phase géométrique $L_1$ et la deuxième lentille de phase géométrique $L_2$ dans une direction transversale grâce à l'inclinaison de l'ensemble de la première lentille de phase géométrique $L_1$ et de la deuxième lentille de phase géométrique $L_2$.

Comme présenté précédemment et représenté sur la figure 5, le dispositif 1 peut comprendre de manière optionnelle une lentille 9. Cette lentille 9 est adaptée à compenser un phénomène de défocalisation issu de l'éloignement longitudinal, quantifié par la première distance D, entre la première lentille de phase géométrique $L_1$ et la deuxième lentille de phase géométrique $L_2$. Cette lentille 9 permet alors de faire en sorte que les faisceaux lumineux polarisés soient également collimatés, c'est-à-dire de rayons de courbure infinis. La lentille 9 est choisie de manière à limiter l'introduction d'aberrations en sortie du dispositif 1. La lentille 9 est par exemple une lentille conventionnelle divergente.

En effet, la première distance D entre la première lentille de phase géométrique $L_1$ et la deuxième lentille de phase géométrique $L_2$ peut être à l'origine d'une défocalisation entre le premier faisceau lumineux polarisé 110 et le deuxième faisceau lumineux polarisé 120.

La défocalisation relative $\Delta$ entre les deux faisceaux lumineux polarisés dépend des rayons de courbure associés à chaque polarisation et s'exprime comme l'écart entre les deux puissances optiques correspondantes.

En pratique, pour la composante de polarisation circulaire droite du faisceau lumineux incident 100 (émis par exemple par une source 2 représentée sur la figure 5), le rayon de courbure associée est donné par la relation :

[Math. 4]

$$R_1 = \frac{F(D - F)}{D}$$

Pour la composante de polarisation circulaire gauche du faisceau lumineux incident 100, le rayon de courbure associé est donné par la relation :

[Math. 5]

$$R_2 = \frac{-F(D + F)}{D}$$

Ainsi, la défocalisation relative $\Delta$ à éventuellement compenser est donnée par la relation suivante :

[Math. 6]

$$\Delta = \frac{1}{R_1} - \frac{1}{R_2} = \frac{2D^2}{F(D^2 - F^2)}$$

La longueur focale de la lentille 9 est déterminée de manière à réduire la défocalisation relative $\Delta$ déterminée. La lentille 9 est ici sans effet sur la polarisation des faisceaux lumineux polarisés et sur la séparation angulaire $\delta$.

Par exemple, pour une longueur focale des lentilles de phase géométrique égale à F = 50 mm et une distance longitudinale entre les deux lentilles de phase géométrique égale à D = 3 mm, les rayons de courbure associés aux deux polarisations sont de l'ordre de : $R_1$ = -783 mm et $R_2$ = -883 mm. La défocalisation relative $\Delta$ associée est de l'ordre de : $\Delta$ = 0,146 dioptrie. Une lentille 9 divergente de longueur focale f = - 1000 mm est par exemple positionnée, en sortie, contre la deuxième lentille de phase géométrique Lz. Les rayons de courbure corrigés sont alors estimés à : $R_1$ = -3608 mm et $R_2$ = -7547 mm.

En variante, il est possible de déterminer la valeur de la première distance D de manière à compenser la défocalisation relative $\Delta$. Pour cela, une valeur du rayon de courbure moyen $R_{av}$ peut être fixée en amont. Cette valeur fixée est choisie de manière à pouvoir être compensée par une lentille choisie. Le rayon de courbure moyen est donné par la relation :

[Math. 7]

$$R_{av} = \frac{R_1 + R_2}{2} = \frac{-F^2}{D}$$

A partir de la valeur fixée pour le rayon de courbure moyen $R_{av}$, on détermine la première distance D. Par exemple, pour une valeur du rayon de courbure moyen $R_{av}$ fixée à $R_{av}$ = 1000 mm et une longueur focale des lentilles de phase géométrique égale à F = 50 mm, la première distance D obtenue est égale à D = 2,5 mm. Les rayons de courbures associés aux deux polarisations sont alors égaux à : $R_1$ = 950 mm et $R_2$ = 1050 mm. Une lentille 9 divergente de longueur focale égale à f = - 1000 mm est introduite et les rayons de courbures modifiés sont égaux à : $R_1$ = -19000 mm et $R_2$ = 21000 mm permettant alors de réduire la défocalisation relative ∆).

Le dispositif 2 séparateur de polarisation peut également comprendre de manière optionnelle la lame à retard quart-d'onde 11. La lame à retard quart-d'onde est positionnée en sortie de la deuxième lentille de phase géométrique Lz. La lame à retard quart-d'onde 11 permet de transformer les polarisations circulaires orthogonales en polarisations linéaires orthogonales. On obtient ainsi un dispositif séparateur de polarisation qui sépare angulairement un faisceau lumineux incident en deux faisceaux lumineux de polarisations linéaires orthogonales. Ainsi, la combinaison de deux lentilles de phase géométrique et d'une lame à retard quart-d'onde permet de reproduire, sous la forme d'un dispositif mince, la fonction d'un prisme de Wollaston.

Dans une application à l'interférométrie différentielle, la lame à retard quart-d'onde permet une recombinaison des faisceaux lumineux polarisés dans le cas par exemple d'une réflexion de ces faisceaux sur une surface à étudier.

C'est notamment le cas lorsque le dispositif 1 séparateur de polarisation est intégré dans un système d'interférométrie différentielle (figures 6 et 7). Cette technique permet de mesurer la variation relative de deux chemins optiques. Par exemple, dans le cas d'un suivi de gravure ou d'érosion par plasma d'une surface 20, l'un des faisceaux lumineux polarisés est réfléchi par une zone érodée 22 et l'autre faisceau lumineux polarisé est réfléchi par une zone protégée 25 du plasma.

Dans ce cas, le dispositif 1 joue un rôle de combineur des faisceaux réfléchis et afin que ceux-ci ne soient pas à nouveau séparés par le dispositif 1, la lame à retard quart-d'onde 11 permet d'inverser les polarisations entre le sens aller et le sens retour.

Selon un premier exemple de système à interférométrie différentielle 50 représenté sur la figure 6, le dispositif 1 est réalisé selon le premier mode de réalisation présenté précédemment. Le système à interférométrie différentielle 50 comprend une source de lumière 2, un dispositif séparateur 30 (non polarisant) et une unité de détection 40. Ces éléments sont conformes à ceux classiquement utilisés et ne sont pas décrits en détails ici.

Dans le dispositif 1, la lame à retard quart-d'onde 11 est par exemple positionnée après une lentille 9 de compensation de la défocalisation. La lame quart-d'onde 11 permet alors une conversion en polarisations linéaires des faisceaux incidents et une conversion en polarisation circulaire des faisceaux réfléchis.

Selon un deuxième exemple de système à interférométrie différentielle 52 représenté sur la figure 7, le dispositif 1 est réalisé selon le deuxième mode de réalisation dans lequel aucun décalage transversal des lentilles de phase géométrique n'est observé, seule la rotation de l'ensemble des deux lentilles de phase géométrique permet d'obtenir un décalage entre le premier centre optique $O_1$ et le deuxième centre optique Oz.

En variante encore (non représentée), un système à interférométrie différentielle peut comprendre un dispositif 1 séparateur de polarisation tel que représenté sur la figure 4.

La figure 8 représente un autre mode de réalisation du dispositif 1 séparateur de polarisation conforme à l'invention. Selon cet autre mode de réalisation, le dispositif 1 comprend deux paires de lentilles de phase géométrique : d'une part la première lentille de phase géométrique $L_1$ et la deuxième lentille de phase géométrique $L_2$ et d'autre part une troisième lentille de phase géométrique $L_3$ et une quatrième lentille de phase géométrique $L_4$. Les lentilles de phase géométrique $L_1$, $L_2$, $L_3$ et $L_4$ sont positionnées en série sur l'axe de propagation du faisceau lumineux incident 100 avec une cinquième distance $S_1$ entre la deuxième lentille de phase géométrique $L_2$ et la troisième lentille de phase géométrique $L_3$.

Par exemple, la troisième lentille de phase géométrique $L_3$ a un troisième centre optique $O_3$, un troisième axe optique $Z_3$ et une troisième longueur focale $F_3$. La quatrième lentille de phase géométrique $L_4$ a un quatrième centre optique $O_4$, un quatrième axe optique $Z_4$ et une quatrième longueur focale $F_4$. De préférence, la troisième longueur focale $F_3$ et la quatrième longueur focale $F_4$ sont égales à la longueur focale F (tout comme la première longueur focale $F_1$ et la deuxième longueur focale $F_2$). En variante, la troisième longueur focale $F_3$ et la quatrième longueur focale $F_4$ peuvent être égales à une autre longueur focale $F_A$, différente de la longueur focale F (à laquelle sont égales la première longueur focale $F_1$ et la deuxième longueur focale $F_2$). Le dispositif fonctionne aussi si la troisième longueur focale $F_3$ et la quatrième longueur focale $F_4$ peuvent être différentes entre elles mais proches, par exemple d'un écart inférieur ou égal à 10 %.

Ici la troisième lentille de phase géométrique $L_3$ et la quatrième lentille de phase géométrique $L_4$ ont une

puissance optique sphérique. La troisième lentille de phase géométrique $L_3$ et la quatrième lentille de phase géométrique $L_4$ sont orientées de manière à être chacune convergente pour une polarisation circulaire et divergente pour l'autre polarisation circulaire. Dans ce cas, la troisième lentille de phase géométrique $L_3$ et la quatrième lentille de phase géométrique $L_4$ focalisent respectivement aux points focaux $F_3$ et $-F_3$ sur le troisième axe optique $Z_3$ et aux points focaux $F_4$ et $-F_4$ sur le quatrième axe optique $Z_4$. En variante, la troisième lentille de phase géométrique $L_3$ et la quatrième lentille de phase géométrique $L_4$ ont une puissance optique cylindrique, tout en étant convergentes pour une polarisation circulaire et divergentes pour l'autre polarisation circulaire. Dans le cas de lentilles ayant une puissance optique cylindrique, par exemple dans le cas de la troisième lentille de phase géométrique $L_3$ a une puissance optique cylindrique, un faisceau lumineux incident collimaté d'axe parallèle au troisième axe optique $Z_3$ est focalisé suivant un segment de droite orthogonal au troisième axe optique $Z_3$ passant par le point focal $F_3$ pour une polarisation circulaire et suivant un autre segment de droite orthogonal au troisième axe optique $Z_3$ passant par le point focal $-F_3$ pour l'autre polarisation circulaire. Ces lentilles de phase géométrique, qu'elles aient une puissance optique sphérique ou cylindrique, peuvent être corrigées de différentes aberrations géométriques, tout comme les lentilles conventionnelles sphériques ou cylindriques peuvent l'être en étant désignées sous la dénomination de lentille asphérique ou acylindrique.

La troisième lentille de phase géométrique $L_3$ et la quatrième lentille de phase géométrique $L_4$ sont positionnées dans le même sens. La troisième lentille de phase géométrique $L_3$ et la quatrième lentille de phase géométrique $L_4$ sont par exemple positionnées dans le même sens que la première lentille de phase géométrique $L_1$ et la deuxième lentille de phase géométrique $L_2$. En variante, la troisième lentille de phase géométrique $L_3$ et la quatrième lentille de phase géométrique $L_4$ peuvent être positionnées dans un sens opposé à la première lentille de phase géométrique $L_1$ et à la deuxième lentille de phase géométrique $L_2$.

De manière générale, le troisième axe optique $Z_3$ et le quatrième axe optique $Z_4$ forment un angle inférieur à quelques degrés. Dans la suite, le troisième axe optique $Z_3$ et le quatrième axe optique $Z_4$ sont parallèles. En variante, le troisième axe optique $Z_3$ et le quatrième axe optique $Z_4$ sont confondus.

La troisième lentille de phase géométrique $L_3$ et la quatrième lentille de phase géométrique $L_4$ sont en contact ou séparées l'une de l'autre d'une troisième distance D' selon le premier axe optique $Z_1$. En pratique, cette troisième distance D' est inférieure à la troisième longueur focale $F_3$ et à la quatrième longueur focale $F_4$. La troisième distance D' est inférieure à 20% de la troisième longueur focale $F_3$ et de la quatrième longueur focale $F_4$. De préférence, la troisième distance D' est par exemple inférieure à 10% de la troisième longueur focale $F_3$ et de la quatrième longueur focale $F_4$. En d'autres termes, la troisième distance D' est aussi faible que possible. Dans le cas où la troisième longueur focale $F_3$ et la quatrième longueur focale $F_4$ sont égales à la longueur focale F, la troisième distance D' est inférieure à la longueur focale F.

Ici, la troisième lentille de phase géométrique $L_3$ et la quatrième lentille de phase géométrique $L_4$ sont placées à proximité l'une de l'autre (la troisième distance D' entre la troisième lentille de phase géométrique $L_3$ et la quatrième lentille de phase géométrique $L_4$ est donc faible devant la longueur focale F). Par exemple, la troisième distance D' est de l'ordre de 3 mm.

Selon ce troisième mode de réalisation, le quatrième centre optique $O_4$ est décalé d'une quatrième distance e' non nulle par rapport au premier axe optique Z, dans une direction transversale à l'axe de propagation du faisceau lumineux incident 100. En pratique, ici le dispositif 1 comprend par exemple un autre moyen de translation entre la troisième lentille de phase $L_3$ et la quatrième lentille de phase géométrique $L_4$. La quatrième distance e' est comprise entre 100 $\mu$m et quelques millimètres. Par construction, une projection $P_3$ du troisième centre optique $O_3$ suivant le troisième axe optique $Z_3$ sur la quatrième lentille de phase géométrique $L_4$ est située à la quatrième distance e' du quatrième centre optique $O_4$.

L'autre moyen de translation est adapté à décaler le quatrième centre optique $O_4$ de la quatrième distance e' par rapport au troisième centre optique $O_3$ selon une direction transverse au premier axe optique $Z_1$. En pratique, l'autre moyen de translation est donc adapté à décaler la quatrième lentille de phase géométrique $L_4$ de la quatrième distance e' selon une direction transversale au premier axe optique $Z_1$. En pratique, le segment $P_1O_2$ est contenu dans un plan XY orthogonal à l'axe Z et le segment $P_3O_4$ est contenu dans un autre plan XY orthogonal à l'axe Z. Par construction, le segment $P_1O_2$ a un sens opposé au segment $P_3O_4$.

Comme visible par exemple sur la figure 8, grâce à cet autre moyen de translation, le quatrième axe optique $Z_4$ est décalé de la quatrième distance e' par rapport au troisième axe optique $Z_3$. Un autre sens de décalage du quatrième axe optique $Z_4$ par rapport au troisième axe optique $Z_3$ est défini à partir de la position du quatrième centre optique $O_4$ par rapport au premier axe optique $Z_1$. L'autre sens de décalage est par exemple défini à partir de la position du quatrième centre optique $O_4$ dans un plan XY par rapport au troisième axe optique $Z_3$. En variante, l'autre sens de décalage peut être défini à partir de la position du quatrième centre optique $O_4$ par rapport à l'axe de propagation du faisceau lumineux incident 100.

Comme visible sur la figure 8, la première paire de lentilles de phase géométrique ($L_1$, $L_2$) est séparée de la deuxième paire de lentilles de phase géométrique ($L_3$, $L_4$) de la cinquième distance $S_1$. En pratique, le premier centre optique $O_1$ et le quatrième centre optique $O_4$ sont séparés de la cinquième distance $S_1$.

Comme visible sur la figure 8, de manière avantageuse selon l'invention, le faisceau lumineux incident 100 est d'abord séparé angulairement et en polarisation en le premier faisceau lumineux polarisé 110 et en le deuxième faisceau lumineux polarisé 120. De manière avantageuse selon l'invention, le premier faisceau lumineux polarisé 110 et le deuxième faisceau lumineux polarisé 120 ont des polarisations circulaires orthogonales. Un premier angle de séparation $\delta_1$ est défini entre le premier faisceau lumineux polarisé 110 et le deuxième faisceau lumineux polarisé 120 qui sont collimatés. Puis le premier faisceau lumineux polarisé 110 est à son tour dévié d'un deuxième angle de séparation $\delta_2$ pour former un troisième faisceau lumineux polarisé 114. Le premier faisceau lumineux polarisé 110 et le troisième faisceau lumineux polarisé 114 ont la même polarisation. Le deuxième angle de séparation $\delta_2$ est défini entre le premier faisceau lumineux polarisé 110 et le troisième faisceau lumineux polarisé 114.

De manière symétrique, le deuxième faisceau lumineux polarisé 120 est à son tour dévié du deuxième angle de séparation $\delta_2/2$ pour former un quatrième faisceau lumineux polarisé 122. Le quatrième faisceau lumineux polarisé 122 et le deuxième faisceau lumineux polarisé 120 ont la même polarisation. De même, le deuxième angle de séparation $\delta_2/2$ sépare le quatrième faisceau lumineux polarisé 122 et le deuxième faisceau lumineux polarisé 120.

La séparation angulaire totale $\delta_3$ en sortie du dispositif 1 illustré sur la figure 8 est alors égale à : $\delta_3 = \delta_1 + \delta_2$.

Comme visible sur la figure 8, les axes du troisième faisceau lumineux polarisé 114 et du quatrième faisceau lumineux polarisé 122 se croisent en sortie du dispositif 1 à une sixième distance $S_2$ du quatrième centre optique $O_4$ en un point I. La sixième distance $S_2$ est donnée par la relation :

[Math. 8]

$$S_2 = \frac{\delta_1}{\delta_2} S_1 = \frac{2e/F}{2e'/F} S_1 = \frac{e}{e'} S_1$$

La distance à laquelle les axes du troisième faisceau lumineux polarisé 114 et du quatrième faisceau lumineux polarisé 122 se croisent dépend donc du décalage transversal entre la première et la deuxième lentilles de phase géométrique d'une part, du décalage transversal entre la troisième et la quatrième lentilles de phase géométrique d'autre part et de la cinquième distance $S_1$ séparant les deux paires de lentilles de phase géométrique.

Ce troisième mode de réalisation peut être avantageusement utilisé dans le cadre de la microscopie optique à contraste différentiel. Cette technique est utilisée pour mettre en évidence de faibles hétérogénéités. Pour cela, en plus de séparer angulairement le faisceau lumineux incident, il est également intéressant de faire en sorte que les deux faisceaux lumineux polarisés séparés se croisent en dehors du dispositif de séparation. Un tel dispositif connu repose sur les prismes de Nomarski. Par rapport à ce dispositif connu, le troisième mode de réalisation du dispositif 1 séparateur de polarisation selon l'invention est plus compact. De plus, il présente l'avantage de permettre un ajustement de l'angle de séparation des faisceaux polarisés ainsi que de la position du croisement des faisceaux en sortie. Il permet également de conserver la qualité du mode de contraste différentiel lorsque l'objectif du microscope est changé ou lorsqu'un objectif à grossissement variable est utilisé. Enfin, comme seul un seul type de lentille de phase géométrique est utilisé pour réaliser une pluralité d'angles de séparation et de positions de croisement, la production est simplifiée.

En variante, le dispositif 1 peut comprendre une portion de la lentille de phase géométrique $L_1$ et une portion de la lentille de phase géométrique $L_2$. Dans ce cas, les portions des lentilles de phase géométrique fonctionnent à la manière d'une lentille de Fresnel.

## Revendications

1. Dispositif (1) séparateur de polarisation destiné à recevoir un faisceau lumineux incident (100), le dispositif (1) comprenant une première lentille de phase géométrique ($L_1$), ayant un premier centre optique ($O_1$), un premier axe optique ($Z_1$) et une première longueur focale ($F_1$) positive pour un premier état de polarisation circulaire et une longueur focale ($-F_1$) opposée pour un autre état de polarisation circulaire orthogonal au premier état de polarisation circulaire, et une deuxième lentille de phase géométrique ($L_2$), ayant un deuxième centre optique ($O_2$), un deuxième axe optique ($Z_2$) et une deuxième longueur focale ($F_2$) positive pour le premier état de polarisation circulaire et une longueur focale ($-F_2$) opposée pour l'autre état de polarisation circulaire, le premier axe optique ($Z_1$) et le deuxième axe optique ($Z_2$) formant un angle inférieur à quelques degrés, la première et la deuxième lentilles de phase géométrique étant séparées l'une de l'autre par une première distance (D) selon le premier axe optique ($Z_1$),
le dispositif (1) étant configuré et orienté de manière à ce qu'une projection ($P_1$) du premier centre optique ($O_1$) suivant le premier axe optique ($Z_1$) sur la deuxième lentille optique de phase géométrique ($L_2$) est située à une deuxième distance (e) non nulle du deuxième centre optique (Oz), ladite première distance (D) étant inférieure à ladite première longueur focale ($F_1$) et à ladite deuxième longueur focale ($F_2$).

2. Dispositif (1) séparateur de polarisation selon la revendication 1, dans lequel la première longueur focale ($F_1$) et la deuxième longueur focale ($F_2$) présentent un écart inférieur ou égal à 10 %.

3. Dispositif (1) séparateur de polarisation selon la revendication 1 ou 2, dans lequel le deuxième axe optique ($Z_2$) est décalé de la deuxième distance (e) par rapport au premier axe optique ($Z_1$).

4. Dispositif (1) séparateur de polarisation selon la revendication 3, comprenant un moyen de translation (5) entre la première et la deuxième lentilles de phase géométrique, ledit moyen de translation (5) étant adapté à décaler le deuxième centre optique ($Z_2$) par rapport au premier centre optique ($O_1$) selon une direction transverse au premier axe optique ($Z_1$).

5. Dispositif (1) séparateur de polarisation selon l'une quelconque des revendications 1 à 4, dans lequel le premier axe optique ($Z_1$) forme un angle ($\theta$) par rapport à un axe de propagation du faisceau lumineux incident sur ledit dispositif (1).

6. Dispositif (1) séparateur de polarisation selon la revendication 5, comprenant un moyen de rotation (7) de la première et de la deuxième lentille de phase géométrique, la première lentille de phase géométrique ($L_1$) et la deuxième lentille de phase géométrique ($L_2$) étant maintenues parallèles l'une à l'autre, ledit moyen de rotation (7) étant adapté à incliner simultanément ladite première et ladite deuxième lentille de phase géométrique par rapport au faisceau lumineux incident (100).

7. Dispositif (1) séparateur de polarisation selon l'une quelconque des revendications 1 à 6, dans lequel la première distance (D) est inférieure à 20% de la première longueur focale ($F_1$) et de la deuxième longueur focale ($F_2$).

8. Dispositif (1) séparateur de polarisation selon l'une quelconque des revendications 1 à 7, dans lequel la première lentille de phase géométrique ($L_1$) et la deuxième lentille de phase géométrique ($L_2$) ont une puissance optique sphérique ou cylindrique.

9. Dispositif (1) séparateur de polarisation selon l'une quelconque des revendications 1 à 8, comprenant une lentille optique (9) divergente.

10. Dispositif (1) séparateur de polarisation selon l'une quelconque des revendications 1 à 9, comprenant une lame à retard quart d'onde (11).

11. Dispositif (1) séparateur de polarisation selon l'une quelconque des revendications 1 à 10, comprenant une troisième lentille de phase géométrique ($L_3$), ayant un troisième centre optique ($O_3$), un troisième axe optique ($Z_3$) et une troisième longueur focale ($F_3$), et une quatrième lentille de phase géométrique ($L_4$), ayant un quatrième centre optique ($O_4$), un quatrième axe optique ($Z_4$) et une quatrième longueur focale ($F_4$), la troisième lentille de phase géométrique ($L_3$) et la quatrième lentille de phase géométrique ($L_4$) étant disposées de manière à présenter une puissance optique du même signe pour le premier état de polarisation circulaire et du signe opposé pour l'autre état de polarisation circulaire orthogonal, le troisième axe optique ($Z_3$) et le quatrième axe optique ($Z_4$) formant un angle inférieur à quelques degrés avec le premier axe optique ($Z_1$),la troisième et la quatrième lentilles de phase géométrique étant séparées l'une de l'autre par une troisième distance (D') selon le troisième axe optique ($Z_3$), une projection du troisième centre optique ($O_3$) suivant le troisième axe optique ($Z_3$) sur la quatrième lentille de phase géométrique ($L_4$) étant située à une quatrième distance (e') non nulle du quatrième centre optique ($O_4$), ladite troisième distance (D') étant inférieure à ladite troisième longueur focale ($F_3$) et à ladite quatrième longueur focale ($F_4$).

12. Interféromètre différentiel (50, 52) comprenant un dispositif (1) séparateur de polarisation selon l'une quelconque des revendications 1 à 11.

13. Microscope optique à contraste différentiel comprenant un dispositif (1) séparateur de polarisation selon l'une quelconque des revendications 1 à 11.

**Patentansprüche**

1. Polarisationstrennvorrichtung (1), die dazu bestimmt ist, einen einfallenden Lichtstrahl (100) zu empfangen, wobei die Vorrichtung (1) eine erste geometrische Phasenlinse ($L_1$) mit einem ersten optischen Zentrum ($O_1$), einer ersten optischen Achse ($Z_1$) und einer ersten positiven Brennweite ($F_1$) für einen ersten Kreispolarisationszustand und einer entgegengesetzten negativen Brennweite ($-F_1$) für einen anderen, zum ersten Kreispolarisationszustand rechtwinkligen Kreispolarisationszustand und eine zweite geometrische Phasenlinse ($L_2$) mit einem zweiten optischen Zentrum ($O_2$), einer zweiten optischen Achse ($Z_2$) und einer zweiten positiven Brennweite ($F_2$) für einen zweiten Kreispolarisationszustand und einer entgegengesetzten negativen Brennweite ($-F_2$) für den anderen Kreispolarisa-tionszustand aufweist, wobei die erste optische Achse ($Z_1$) und die zweite optische Achse ($Z_2$) einen weniger als einige Grad großen Winkel bilden, wobei die erste und die zweite geometrische Phasenlinse durch einen ersten Abstand (D) entlang der ersten optischen Achse ($Z_1$) voneinander getrennt sind,
wobei die Vorrichtung (1) so ausgelegt und ausgerichtet ist, daß eine Projektion ($P_1$) des ersten optischen Zentrums ($O_1$) entlang der ersten optischen Achse ($Z_1$) auf die zweite optische geometrische Phasenlinse ($L_2$) in einem von Null verschiedenen zweiten Abstand (e) angeordnet ist, wobei der erste Abstand (D) kleiner als die erste Brennweite ($F_1$) und die zweite Brennweite ($F_2$) ist.

2. Polarisationstrennvorrichtung (1) gemäß Anspruch 1, bei der die erste Brennweite ($F_1$) und die zweite Brennweite ($F_2$) einen Abstand von weniger als oder gleich 10% aufweisen.

3. Polarisationstrennvorrichtung (1) gemäß Anspruch 1 oder 2, bei der die zweite optische Achse ($Z_2$) gegenüber der ersten optischen Achse ($Z_1$) um den zweiten Abstand (e) versetzt ist.

4. Polarisationstrennvorrichtung (1) gemäß Anspruch 3 mit einem Verschiebungsmittel (5) zwischen der ersten und der zweiten geometrischen Phasenlinse, wobei das Verschiebungsmittel (5) dazu ausgelegt ist, das zweite optische Zentrum ($O_2$) gegenüber dem ersten optischen Zentrum ($O_1$) in einer zur ersten optischen Achse ($Z_1$) senkrechten Richtung zu verschieben.

5. Polarisationstrennvorrichtung (1) gemäß einem der Ansprüche 1 bis 4, bei der die erste optische Achse ($Z_1$) ge-genüber einer Ausbreitungsachse des auf die Vorrichtung (1) einfallenden Lichtstrahls einen Winkel ($\theta$) bildet.

6. Polarisationstrennvorrichtung (1) gemäß Anspruch 5 mit einem Mittel (7) zum Drehen der ersten und der zweiten geometrischen Phasenlinse, wobei die erste geometrische Phasenlinse ($L_1$) und die zweite geometrische Phasen-linse ($L_2$) zueinander parallel gehalten werden, wobei das Drehmittel (7) dazu ausgelegt ist, die erste und die zweite geometrische Phasenlinse gleichzeitig gegenüber dem einfallenden Lichtstrahl (100) zu neigen.

7. Polarisationstrennvorrichtung (1) gemäß einem der Ansprüche 1 bis 6, bei der der erste Abstand (D) weniger als 20% der ersten Brennweite ($F_1$) und der zweiten Brennweite ($F_2$) beträgt.

8. Polarisationstrennvorrichtung (1) gemäß einem der Ansprüche 1 bis 7, bei der die erste geometrische Phasenlinse ($L_1$) und die zweite geometrische Phasenlinse ($L_2$) einen kugelförmigen oder zylinderförmigen Brechwert aufweisen.

9. Polarisationstrennvorrichtung (1) gemäß einem der Ansprüche 1 bis 8 mit einer optischen Zerstreuungslinse (9).

10. Polarisationstrennvorrichtung (1) gemäß einem der Ansprüche 1 bis 9 mit einem Viertelwellenverzögerungsplättchen (11).

11. Polarisationstrennvorrichtung (1) gemäß einem der Ansprüche 1 bis 10 mit einer dritten geometrischen Phasenlinse ($L_3$), die ein drittes optisches Zentrum ($O_3$), eine dritte optische Achse ($Z_3$) und eine dritte Brennweite ($F_3$) aufweist, und einer vierten geometrischen Phasenlinse ($L_4$), die ein viertes optisches Zentrum ($O_4$), eine vierte optische Achse ($Z_4$) und eine vierte Brennweite ($F_4$) aufweist, wobei die dritte geometrische Phasenlinse ($L_3$) und die vierte geo-metrische Phasenlinse ($L_4$) so angeordnet sind, daß sie einen Brechwert mit demselben Vorzeichen für den ersten Kreispolarisationszustand und mit dem entgegengesetzten Vorzeichen für den anderen rechtwinkligen Kreispolarisationszustand aufweisen, wobei die dritte optische Achse ($Z_3$) und die vierte optische Achse ($Z_4$) mit der ersten optischen Achse ($Z_1$) einen Winkel von weniger als einigen Grad bilden, wobei die dritte geometrische Phasenlinse ($L_3$) und die vierte geometrische Phasenlinse ($L_4$) durch einen dritten Abstand (D') entlang der dritten optischen Achse ($Z_3$) voneinander getrennt sind, wobei eine Projektion des dritten optischen Zentrums ($O_3$) entlang der dritten optischen Achse ($Z_3$) auf die vierte geometrische Phasenlinse ($L_4$) in einem von Null verschiedenen vierten Abstand (e') vom vierten optischen Zentrum ($O_4$) liegt, wobei der dritte Abstand (D') kleiner als die dritte Brennweite ($F_3$) und als die vierte Brennweite ($F_4$) ist.

**12.** Differenzinterferometer (50, 52) mit einer Polarisationstrennvorrichtung (1) gemäß einem der Ansprüche 1 bis 11.

**13.** Optisches Differenzkontrastmikroskop mit einer Polarisationstrennvorrichtung (1) gemäß einem der Ansprüche 1 bis 11.

**Claims**

**1.** A polarization separation device (1) intended to receive an incident light beam (100), the device (1) comprising a first geometric-phase lens ($L_1$), having a first optical center ($O_1$), a first optical axis ($Z_1$) and a positive first focal length ($F_1$) for a first circular polarization state and an opposite focal length ($-F_1$) for another circular polarization state orthogonal to the first circular polarization state, and a second geometric-phase lens ($L_2$), having a second optical center ($O_2$), a second optical axis ($Z_2$) and a positive second focal length ($F_2$) for the first circular polarization state and an opposite focal length ($-F_2$) for the other circular polarization state, the first optical axis ($Z_1$) and the second optical axis ($Z_2$) forming an angle smaller than a few degrees, the first and second geometric-phase lenses being separated from one another by a first distance (D) according to the first optical axis ($Z_1$), the device (1) being configured and directed so that a projection ($P_1$) of the first optical center ($O_1$) according to the first optical axis ($Z_1$) on the second geometric-phase optical lens ($L_2$) is located at a non-zero second distance (e) from the second optical center ($O_2$), said first distance (D) being smaller than said first focal length ($F_1$) and said second focal length ($F_2$).

**2.** The polarization separation device (1) according to claim 1, wherein the first focal length ($F_1$) and the second focal length ($F_2$) have a difference less than or equal to 10%.

**3.** The polarization separation device (1) according to claim 1 or 2, wherein the second optical axis ($Z_2$) is offset by the second distance (e) with respect to the first optical axis ($Z_1$).

**4.** The polarization separation device (1) according to claim 3, comprising a translational means (5) between the first and second geometric-phase lenses, said translational means (5) being adapted to offset the second optical center (Oz) with respect to the first optical center ($O_1$) according to a direction transverse to the first optical axis ($Z_1$).

**5.** The polarization separation device (1) according to any one of claims 1 to 4, wherein the first optical axis ($Z_1$) forms an angle ($\theta$) with respect to an axis of propagation of the incident light beam on said device (1).

**6.** The polarization separation device (1) according to claim 5, comprising a means (7) for rotating the first and second geometric-phase lenses, the first geometric-phase lens ($L_1$) and the second geometric-phase lens ($L_2$) being held parallel to one another, said rotational means (7) being adapted to simultaneously incline said first and second geometric-phase lenses with respect to the incident light beam (100).

**7.** The polarization separation device (1) according to any one of claims 1 to 6, wherein the first distance (D) is smaller than 20% of the first focal length ($F_1$) and of the second focal length ($F_2$).

**8.** The polarization separation device (1) according to any one of claims 1 to 7, wherein the first geometric-phase lens ($L_1$) and the second geometric-phase lens ($L_2$) have a spherical or cylindrical optical power.

**9.** The polarization separation device (1) according to any one of claims 1 to 8, comprising a divergent optical lens (9).

**10.** The polarization separation device (1) according to any one of claims 1 to 9, comprising a quarter-wave delay plate (11).

**11.** The polarization separation device (1) according to any one of claims 1 to 10, comprising a third geometric-phase lens ($L_3$), having a third optical center ($O_3$), a third optical axis ($Z_3$) and a third focal length ($F_3$), and a fourth geometric-phase lens ($L_4$), having a fourth optical center ($O_4$), a fourth optical axis ($Z_4$) and a fourth focal length ($F_4$), the third geometric-phase lens ($L_3$) and the fourth geometric-phase lens ($L_4$) being disposed so as to have an optical power with the same sign for the first circular polarization state and with an opposite sign for the other orthogonal circular polarization state, the third optical axis ($Z_3$) and the fourth optical axis ($Z_4$) forming an angle smaller than a few degrees with the first optical axis ($Z_1$),the third and fourth geometric-phase lenses being separated from one another by a third distance (D') according to the third optical axis ($Z_3$), a projection of the third optical center ($O_3$) according to the third optical axis ($Z_3$) on the fourth geometric-phase lens ($L_4$) being located at a non-zero fourth distance (e') from the fourth optical center ($O_4$), said third distance (D') being smaller than said third focal length ($F_3$) and said fourth focal length ($F_4$).

12. A differential interferometer (50, 52) comprising a polarization separation device (1) according to any one of claims 1 to 11.

13. A differential contrast optical microscope comprising a polarization separation device (1) according to any one of claims 1 to 11.

# Fig.1

# Fig.2

# Fig.3

# Fig.4

# Fig.5

# Fig.6

# Fig.7

# Fig.8

## RÉFÉRENCES CITÉES DANS LA DESCRIPTION

**Littérature non-brevet citée dans la description**

- Tunable angular shearing interferometer based on wedged liquid crystal cells. *Applied Optics,* 01 Novembre 2017, vol. 56 (31), 8656

- **KATHRYN J. HORNBURG et al.** Optimization of aspheric geometric-phase lenses for improved field-of-view. *SPIE Optical Engineering and Applications, Proceedings Volume 10743, Optical Modeling and Performance Predictions X,* 2018, vol. 10743, 1074305